# EUROPEAN PATENT APPLICATION

(11) **EP 1 236 608 A1**
(43) Date of publication of application: **04.09.2002**
(21) Application number: 02075602.9
(22) Date of filing: 14.02.2002
(51) Int. Cl.: B60L 13/03, B61B 13/12

(54) **Rail system**

(30) Priority: 28.02.2001 NL 1017462
(71) Applicant: Arcadis Bouw/Infra B.V., 3800 AE Amersfoort (NL)
(72) Inventor: Starmans, Marc Johannes Maria, 3768 CZ Soest (NL); Koopal, René, 3815 LR Amersfoort (NL)
(74) Representative: Van Breda, Jacobus

(57) **Abstract**

The invention relates to a rail system comprising railways and at least one train having traction means such as diesel or electric traction, being movable over the railways, wherein also a linear motor is provided that is active at least when the train is accelerating. The linear motor comprises a stator and a rotor, the rotor being mounted on the train and the stator being provided only on a predetermined section of the rail way, where acceleration or deceleration of the train is intended.

## Description

The invention relates to a rail system comprising railways and at least one train having traction means such as diesel or electric traction, being movable over the railways.

A rail system of this type is known in practice. The known rail system is also called heavy rail system in order to distinguish it from the also known light rail system. The traditionally known rail system is used practically all over Europe and the USA and is characterized in that it has a relatively low capacity produced by the combination of a relatively low maximum speed and a low maximum acceleration. In contrast, the above-mentioned light rail system has a proportionally high capacity and intensive rail traffic. A further development that may be mentioned is the magnetic levitation train, which is capable of higher maximum speeds as well as greater acceleration and deceleration, so that intensive train traffic is possible.

It is the object of the invention to improve the conventional heavy rail system by increasing the capacity. To this end the invention aims to raise the maximum possible acceleration applicable in the known rail system.

A rail system according to the preamble of claim 1 is known from US-A-3,877,387. However, the rail system known from this publication demands a considerable capital outlay and a complete adaptation of the rail net, involving high costs.

The rail system according to the invention is characterized in that the linear motor comprises a stator and a rotor, the rotor being mounted on the train and the stator being provided only on a predetermined section of the railway, where acceleration or deceleration of the train is intended.

An important advantage of the rail system according to the invention is that the adaptations to the existing rail ways are calculable and will remain within limits, while, if such adaptations are not carried out, the present rail system will still be compatible with trains that are adapted according to the invention. This greatly promotes the introduction of the rail system according to the invention due to the fact that the costs can be spread over time because of the possibility of a phased introduction.

Although the stator of the linear motor can be used in any desired section of the existing rail ways, it is particularly advantageous for the stator to be provided in a section that succeeds a station and/or that is immediately adjacent to a station. In this way it is possible by means of this auxiliary traction to effectively provide and guarantee the necessary acceleration, especially if the existing power net of the traditional rail system is unable to provide sufficient and effective acceleration of the train. If, as is common practice, both through trains and slow trains are deployed this system improves the acceleration behaviour of, in particular, the slow trains to such an extent as to allow a more homogeneous utilization of the railway net, which will result in an increased capacity of this net. Moreover, when applying line section security, its effects that are unfavourable for the railway net's capacity seem to be reduced more than could be expected on the basis of the improved railway net utilization.

For environmental and energy-technical reasons it is preferred for the stator to be connected to a member for energy storage and release, such as a fly wheel-coupled generator. The flywheel driven by the generator may be fed, for example, from the regular power net for the principle traction of the train. However, an important advantage is that such a fly wheel-coupled generator makes a circuit possible wherein the generator is connected as motor for driving the fly wheel, wherein the motor can be connected to an auxiliary stator, which is placed in a break trajectory of the rail ways. In this way the breaking energy released during deceleration of a train according to the invention is effectively utilized.

The invention is also embodied in a railway comprising two substantially parallel iron tracks and including, between or next to the iron tracks, a stator of a linear motor.

According to the invention, the stator is positioned in a predetermined section of the iron tracks for providing additional acceleration or deceleration energy.

The invention is also embodied in a train, embodied with one or more bogies that are provided with traction means, wherein the traction means comprise a rotor of a linear motor.

The invention will now be further elucidated with reference to a non-limiting exemplary embodiment of the rail system according to the invention, referring to the drawing.

The drawing shows in:
- Figure 1 a bogy of a train according to the invention; and in
- Figure 2 a section of a railway according to the invention.

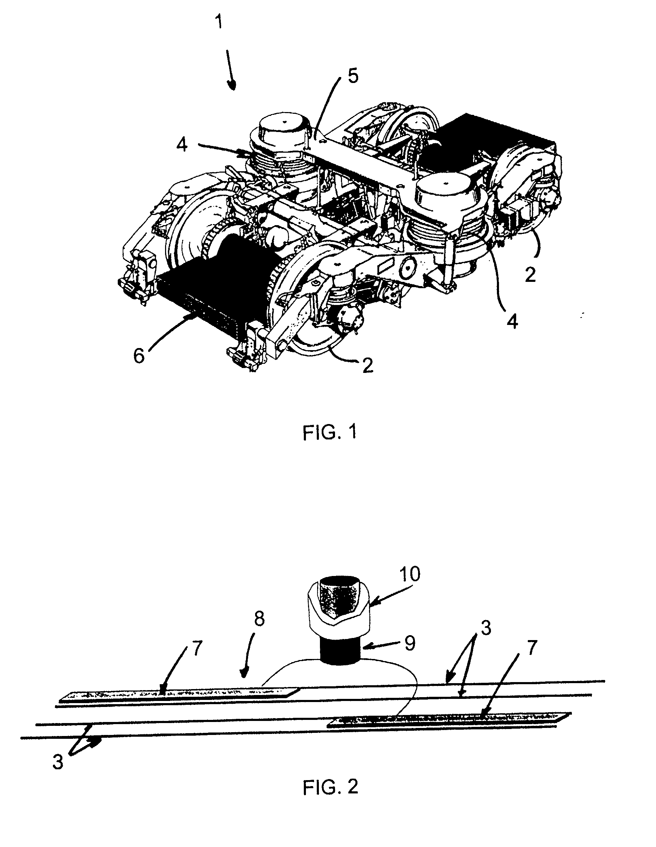

The bogy 1 shown in Figure 1 is embodied with steel wheels 2 running over substantially iron tracks 3 (see Figure 2). Usually, a train or wagon is embodied with two such bogies 1 shown in Figure 1; one at the front and one at the rear of the train. Figure 1 also shows the spring packet 4 and a part of the frame 5 resting on the spring packet 4 that supports the body of the train or wagon.

Figure 1 further schematically shows a part of the auxiliary traction, which may be activated when the train is accelerating or decelerating. The auxiliary traction is embodied as a linear motor, the bogy 1 being provided with a rotor indicated by reference number 6 in the form of a permanent magnet or one to be activated by means of separate electric excitation. To the rotor 6 belongs a stator 7 which, as shown in Figure 2, is accommodated between the iron tracks 3 of a railway 8. The stator 7 may of course also be positioned next to the iron tracks 3. This stator 7 is especially useful where the train needs extra acceleration or deceleration; in particular in the section connected to a station. In order to provide an extra possibility for acceleration, the stator 7 has to follow after a station, whereas in order to realize an extra deceleration, the stator 7 has to proceed the respective station.

Figure 2 further schematically illustrates that the stator 7 may be connected to an energy buffer, such as a fly wheel-coupled generator 9. This fly wheel-coupled generator 9 may be connected as motor for driving the flywheel 10. In a manner known in itself, the fly wheel 10 is thus used as storage medium for energy that may become available for the acceleration of the train when the same drives the generator 9 feeding the auxiliary stator 7. Energy may be stored in the flywheel 10 by connecting the generator 9 as motor, wherein the motor may be connected to an auxiliary stator 7 located in a break trajectory of the railway 8. Power may also be supplied from the regular electrical mains.

The advantages of the rail system according to the invention may be convincingly demonstrated with reference to the following exemplary calculation, wherein a conventional rail system is compared with a rail system according to the invention. In this example a section of 30 km length is examined on which three intermediate stations are placed. Both intercity trains and slow trains are riding on the evaluated line. The intercity trains only stop at the terminals of the line while the slow trains also stop at the intermediate stations. The result of comparing the two railway systems at a line section speed of 140 km per hour and 160 km per hour, respectively, was as follows.

### 140 km per hour; travelling time in the prior art

**Intercity 14.3 minutes**
**Slow trains 20.2 minutes**
**Travelling time of slow train according to the invention 16.9 minutes.**

At a traffic volume of four trains per hour and a succession time of three minutes there is a line section load of the rail system according to the invention of 77% as opposed to 98% with the slow trains according to the prior art.

For a 160 km per hour maximum line section speed the following figures apply.

### 160 km per hour; travel time according to prior art

**Intercity 13.0 minutes**
**Slow train 19.5 minutes**
**Travelling time of slow train according to the invention 15.7 minutes**

The respective line section load is 75% for the slow train according to the invention and 100% for the slow train according to the prior art.

## Claims

1. A rail system comprising railways and at least one train having traction means such as diesel or electric traction, being movable over the railways, wherein also a linear motor is provided that is active at least when the train is accelerating, **characterized in that** the linear motor comprises a stator and a rotor, the rotor being mounted on the train and the stator being provided only on a predetermined section of the rail way, where acceleration or deceleration of the train is intended.

2. A rail system according to claim 1, **characterized in that** the stator is provided in a section that succeeds a station and/or that is immediately adjacent to a station.

3. A rail system according to claim 1 or 2, **characterized in that** the stator is connected to a member for energy storage and release, such as a fly wheel-coupled generator.

4. A rail system according to claim 3, **characterized in that** the fly wheel-coupled generator may be connected as motor for driving the fly wheel, wherein the motor can be connected to an auxiliary stator, which is placed in a break trajectory of the rail ways.

5. A railway comprising two substantially parallel iron tracks and including between or next to the iron tracks, a stator of a linear motor, **characterized in that** the stator is positioned in a predetermined section of the iron tracks for providing additional acceleration or deceleration energy.

6. A railway according to claim 5, **characterized in that** the stator is connected to a member for energy storage and release, such as a fly wheel-coupled generator.

7. A train comprising one or more bogies that are provided with traction means, wherein the traction mean comprise a rotor of a linear motor.
